# EUROPÄISCHE PATENTSCHRIFT

(11) **EP 1 162 786 B1**
(45) Veröffentlichungstag und Bekanntmachung des Hinweises auf die Patenterteilung: **12.07.2006**
(21) Anmeldenummer: 01110678.8
(22) Anmeldetag: 02.05.2001
(51) Int. Cl.: H04L 12/413, H04L 12/407, H04L 12/40

(54) **Verfahren zur Datenkommunikation zwischen mehreren MAC-Steuereinheiten**
Method of data communication between a plurality of MAC control units
Prcédé de communication de données entre une pluralité d'unités de contrôle MAC

(30) Priorität: 08.06.2000 DE 10028370
(43) Veröffentlichungstag der Anmeldung: 12.12.2001
(73) Patentinhaber: SIEMENS AKTIENGESELLSCHAFT, 80333 München (DE)
(72) Erfinder: Hiestand, Thomas, 85293 Reichertshausen (DE)

(56) Entgegenhaltungen:
- US-A- 4 292 623
- US-A- 5 430 848
- US-A- 5 886 992
- IEEE: "Part 3: Carrier sense multiple access with collision detection access method and physical layer" IEEE STANDARD 802.3, 1998 EDITION, [Online] 1998, Seiten 488-500, XP002271672 Gefunden im Internet: <URL:www.ieee.org> [gefunden am 2004-02-26]

## Beschreibung

Die Erfindung betrifft ein Verfahren zur Steuerung einer Datenkommunikation zwischen mehreren MAC-(Media Access Control)-Steuereinheiten.

In bestehenden und zukünftigen digitalen Kommunikationseinrichtungen werden mit Hilfe von auf Kommunikationsbaugruppen angeordneten Layer-2-Steuereinheiten, insbesondere MAC-(Media Access Control)-Steuereinheiten, Punkt-zu-Punkt-Verbindungen zwischen den MAC-Steuereinheiten und der physikalischen Schicht ("physical layer") gemäß dem ISO/OSI-Modell, beispielsweise einer physikalischen 100 BT-Schnittstelle, über die standardisierte MII-(Media Independent Interface)-Schnittstelle aufgebaut, aufrechterhalten und beendet. Als MAC-Steuereinheiten können beispielsweise Kommunikationscontroller, FPGAs (Field Programmal Gateaway) oder ASICs (Applications Specific Integrated Circuit) eingesetzt werden, welche auf unterschiedlichen Boards-, Subracks- oder Backplane-Ebenen einer Kommunikationseinrichtung angeordnet sein können. Das Media Access Protocol ist im Standard IEEE 802.3 definiert.

Hierbei wird zur Datenkommunikation zwischen beispielsweise einer MAC-Steuereinheit und der physikalischen Schicht gemäß dem ISO/OSI-Modell von der MAC-Steuereinheit über die standardisierte MII-Schnittstelle eine Verbindung zum dem "physical layer" des OSI-Modells hergestellt. Die standardisierte MII-Schnittstelle ist insbesondere dazu vorgesehen, den IEEE 802.3 CSMA/CD Data Link Layer (MAC-, Ethernet-Controller bzw. -Steuereinheit) mit dem "physical layer" des OSI-Modells zu verbinden. Die MII-Schnittstelle ist ebenso in der IEEE 802.3 - 1998 Kapitel 22 definiert.

Bislang wird die Datenkommunikation zwischen einer ersten MAC-Steuereinheit und einer weiteren MAC-Steuereinheit anhand von zusätzlicher Hardware, beispielsweise von Repeatern und zusätzlichen Hubs sowie Vermittlungseinrichtungen, realisiert, d.h. es wird eine Punkt-zu-Punkt-Verbindung von beispielsweise einer ersten MAC-Steuereinheit zu einer zweiten MAC-Steuereinheit über die MII-Schnittstelle zur physikalischen Schicht, beispielsweise 100 BT , und die zusätzliche in der physikalischen Schicht angeordnete Hardware wiederum über eine zweite Punkt-zu-Punkt-Verbindung über eine weitere MII-Schnittstelle zur zweiten MAC-Steuereinheit aufgebaut. Eine derartig realisierte Datenkommunikation zwischen mehreren MAC-Steuereinheit erfordert einen ernormen schaltungstechnischen Aufwand und ist nicht kollisionfrei. Bei standardisierten physikalischen Schnittstellen wie beispielsweise 100 BT werden beim Auftreten von durch gleichzeitiges Senden von Daten durch unterschiedliche MAC-Steuereinheiten hervorgerufene Kollisionen standardgemäß "Jabbersequenzen" ("Jamming Sequence") erzeugt und zu den angeschlossenen MAC-Steuereinheiten übertragen, durch welche die angeschlossenen Teilnehmer bzw. MAC-Steuereinheiten dazu veranlaßt werden, das Senden von Daten einzustellen bzw. zu beenden. Anschließend werden nach Ablauf einer zufällig vorgegebenen Zeitspanne durch die einzelnen MAC-Steuereinheiten erneut Daten gesendet. Beim 100 BT Verfahren treten somit verstärkt Kollisionen auf, wenn mehrere MAC-Steuereinheiten versuchen nahezu gleichzeitig zu senden. Je größer die Teilnehmeranzahl, um so mehr Kollisionen treten auf und umso geringer wird die für die Datenkommunikation nutzbare Bandbreite des Übertragungsmediums, d.h. die nutzbare Bandbreite nimmt mit der steigender Teilnehmerzahl ab.

Des Weiteren sind für den Aufbau derartiger Punkt-zu-Punkt-Verbindungen jeweils zwei Leitungspaare vorzusehen, was bei einer größeren Anzahl von Teilnehmern zu einer hohen, unüberschaubaren Leitungsanzahl in der Kommunikationseinrichtung führt. Ein derartiges Vorhalten von zusätzlicher Hardware und Verbindungsleitungen ist insbesondere bei der Realisierung von Kommunikationseinrichtungen extrem kostenintensiv und erschwert das Auffinden von Fehlkonfigurationen innerhalb der digitalen Kommunikationseinrichtung.

Aus der US Patentschrift 5,430,848 A ist ein Computer-Bus bekannt, bei dem die dort offenbarten Verfahren zum Steuern von Modulzugriffen auf einer "bus arbitration logic" basieren. Diese umfasst eine Logik zum Bestimmen der Priorität eines Moduls am Bus. Aufgrund von Modulprioritäten erhält ein jeweiliges Modul Zugriff auf den Bus, wobei alle Module am Bus offensichtlich unterschiedliche Prioritäten zugewiesen bekommen.

Weiterhin ist aus der IEEE-Veröffentlichung "Part 3: Carrier sense multiple access with collision detection access method and physical layer" aus IEEE Standard 802.3, 1998 Edition, Seiten 448-500, eine MII-Schnittstelle bekannt, die an eine MAC-Steuereinheit und an eine Anpassungseinheit hin zum Übertragungsmedium angeschlossen wird.

Die der Erfindung zugrundeliegende Aufgabe besteht darin, die Datenkommunikation zwischen einer ersten MAC-Steuereinheit und mindestens einer weiteren MAC-Steuereinheit zu verbessern. Die Aufgabe wird ausgehend von einem Verfahren gemäß den Merkmalen des Patentanspruches 1 gelöst.

Der wesentliche Aspekt des erfindungsgemäßen Verfahrens ist darin zu sehen, daß zur Datenkommunikation zwischen mehreren gleichberechtigten MAC-(Media-Access Control)-Steuereinheiten, die über eine MII-(Media Independent Interface)-Schnittstelle an jeweils eine Anpassungseinheit angeschlossen sind und die Anpassungseinheiten über einen mehrere Datenleitungen und mindestens eine Steuerleitung umfassenden Datenbus verbunden sind, die Anpassungseinheiten über ein Synchronisierungssignal synchronisiert werden und jeder Anpassungseinheit ein Berechtigungszeitschlitz zugeteilt wird. Des Weiteren wird den Anpassungseinheiten über ein Steuersignal der Belegungszustand des Datenbusses signalisiert und durch die Anpassungseinheit im zugehörigen Berechtigungszeitschlitz anhand des Steuersignals der Belegungszustand des Datenbusses ermittelt. Anschließend wird bei einem einen freien Datenbus signalisierenden Steuersignal der angeschlossenen, gleichberechtigten MAC-Steuereinheit eine Sendeberechtigung zugeteilt oder bei einem einen belegten Datenbus signalisierenden Steuersignal der angeschlossenen, gleichberechtigten MAC-Steuereinheit keine Sendeberechtigung zugeteilt. Vorteilhaft ist das erfindungsgemäße Verfahren zur Steuerung der Datenkommunikation von mehreren, gleichberechtigten MAC-Steuereinheiten als "Carrier Sense Multiple Access/Collision Avoid"-Verfahren ausgestaltet, d.h. die Datenkommunikation zwischen mehreren MAC-Steuereinheiten ist kollisionsfrei. Hierzu ist erfindungsgemäß ein Datenbus vorgesehen, der die den MAC-Steuereinheiten vorgeschalteten Anpassungeinheiten miteinander verbindet. An den Datenbus können besonders vorteilhaft eine große Anzahl von Busteilnehmer angeschlossen werden, wobei eine direkte Datenkommunikation zwischen dem "physical layer" und den einzelnen Busteilnehmer bzw. den MAC-Steuereinheiten sowie den einzelnen MAC-Steuereinheiten untereinander, ohne zusätzliche Hardware, wie beispielsweise Repeater, Hubs oder Switches vorzusehen, realisierbar wird. Die maximale Anzahl der Busteilnehmer bzw. MAC-Steuereinheiten, bis zu der keine zusätzliche Hardware erforderlich ist, ist abhängig von dem verwendeten Übertragungsmedium bzw. der eingesetzten Übertragungstechnologie. Des Weiteren sind alle Busteilnehmer bzw. MAC-Steuereinheiten gleichberechtigt und die Busteilnehmer können auf den Datenbus vorzugsweise in einer bestimmten Reihenfolge zugreifen, wobei jeder Busteilnehmer seine Berechtigung zum "Bus Access" bzw. Buszugriff selbständig mit Hilfe des erfindungsgemäßen zeitgeschützten "Medium Access"-Verfahrens einleitet. Hierzu wird jeder Anpassungseinheit bzw. der daran angeschlossenen MAC-Steuereinheit ein Berechtigungszeitraum zugeteilt, indem der Busteilnehmer bzw. die MAC-Steuereinheit die Berechtigung zum Buszugriff erhält, sofern nicht durch das Steuersignal eine Belegung des Datenbusses durch eine weitere MAC-Steuereinheit signalisiert wird. Nach Zuteilung der Sendeberechtigung durch die Anpassungseinheit wird durch die MAC-Steuereinheit über die Anpassungseinheit beispielsweise ein oder mehrere Datenpakete an den Datenbus durchgeschaltet. Nach dem erfolgreichen Senden des beispielsweise einen Datenpakets wird mit Hilfe der Anpassungseinheit das Steuersignal in den einen freien Datenbus signalisierenden Zustand geschaltet.

Das erfindungsgemäße Verfahren ist für eine überschaubare Anzahl von Busteilnehmern optimiert und bietet eine Möglichkeit mehrere MAC-Steuereinheiten physikalisch direkt miteinander zu verbinden, um diese beispielsweise via Ethernet bzw. IEEE 802.3 LAN logisch miteinander kommunizieren zu lassen.

Vorteilhaft wird der Berechtigungszeitschlitz beispielsweise mit Hilfe eines in den Anpassungseinheiten angeordneten Zählers ermittelt und der Zähler jeweils mit Hilfe des Synchronisierungssignals zurückgesetzt - Anspruch 2. Des Weiteren wird für N Anpassungseinheiten den Zählern jeweils die Länge N+1 zugewiesen und ein Berechtigungszeitschlitz ist durch einen Zählerstand festgelegt - Anspruch 3. Durch die erfindungsgemäße Realisierung des "Medium Access"-Verfahrens mit Hilfe von in den Anpassungseinheiten angeordneten Zählern wird vorteilhaft pro Anpassungseinheit ein Berechtigungszeitschlitz festgelegt, der einem Zählerstand entspricht. Durch die Synchronisierung der Zähler über das erfindungsgemäße Sychronisierungssignal wird ein Auseinanderlaufen der Zähler vermieden. Des Weiteren wird vorteilhaft die Synchronisierung der Zähler in dem erfindungsgemäßen N+1-ten Berechtigungszeitschlitz bzw. bei dem N+1-ten Zählerstand durchgeführt.

Eine weitere vorteilhafte Ausgestaltung des erfindungsgemäßen Verfahrens ist darin zu sehen, daß durch die Zuteilung eines Berechtigungszeitschlitzes für genau eine Anpassungseinheit eine fest vorgegebene Zugriffsreihenfolge auf den Datenbus definiert wird - Anspruch 7. Hierdurch sind alle über die Anpassungseinheiten an den Datenbus angeschlossenen MAC-Steuereinheiten gleichberechtigt hinsichtlich des Buszugriffes. Des Weiteren kann den Anpassungseinheiten über ein weiteres Steuersignal eine Vorreservierung des aktuell belegten Datenbusses durch mindestens eine Anpassungseinheit signalisiert werden - Anspruch 8. Somit wird den MAC-Steuereinheiten in einer durch die Zuteilung der Berechtigungszeitschlitze vorgegebenen Reihenfolge der Zugriff auf den Datenbus ermöglicht, wodurch durch mehrfache Zugriffe entstehende Kollisionen vermieden werden können. Des Weiteren wird durch die Kollisionsfreiheit des Datenbusses die nutzbare Bandbreite des Übertragungsmediums konstant gehalten und somit unabhängig von der Teilnehmerzahl, d.h. die durch Kollisionen hervorgerufenen Reduzierung der nutzbaren Übertragungsbandbreite wird erheblich verringert. Um sendebereiten MAC-Steuereinheiten die Vorreservierung des Datenbusses zu ermöglichen, wird mit Hilfe eines weiteren Steuersignals, welches beispielsweise ebenfalls mit Hilfe der Anpassungseinheiten im Berechtigungszeitschlitz ausgewertet wird, eine Vorreservierung des Datenbusses signalisiert. Mit Hilfe des weiteren Steuersignals kann somit besonders vorteilhaft die festgelegte Zugriffsreihenfolge zu Gunsten einer lastenindividuellen Steuerung der Datenkommunikation abgeändert werden.

Vorteilhafte Weiterbildungen und Ausbildungen des erfindungsgemäßen Verfahrens, insbesondere eine Anordnung zur Datenkommunikation sind in den weiteren Patentansprüchen beschrieben.

Im folgenden wird das erfindungsgemäße Verfahren anhand von einem Prinzipschaltbild und zwei Ablaufdiagrammen näher erläutert.
- Figur 1: zeigt beispielhaft in einem Prinzipschaltbild eine Kommunikationseinrichtung mit mehreren Kommunikationsbaugruppen, die über den Datenbus miteinander verbunden sind,
- Figur 2: zeigt beispielhaft in einem Signalablaufdiagramm die Steuerung der Datenkommunikation über den erfindungsgemäßen Datenbus und
- Figur 3: zeigt beispielhaft in einem weiteren Signalablaufdiagramm eine erfindungsgemäße Variante für die Steuerung der Datenkommunikation über den erfindungsgemäßen Datenbusses.

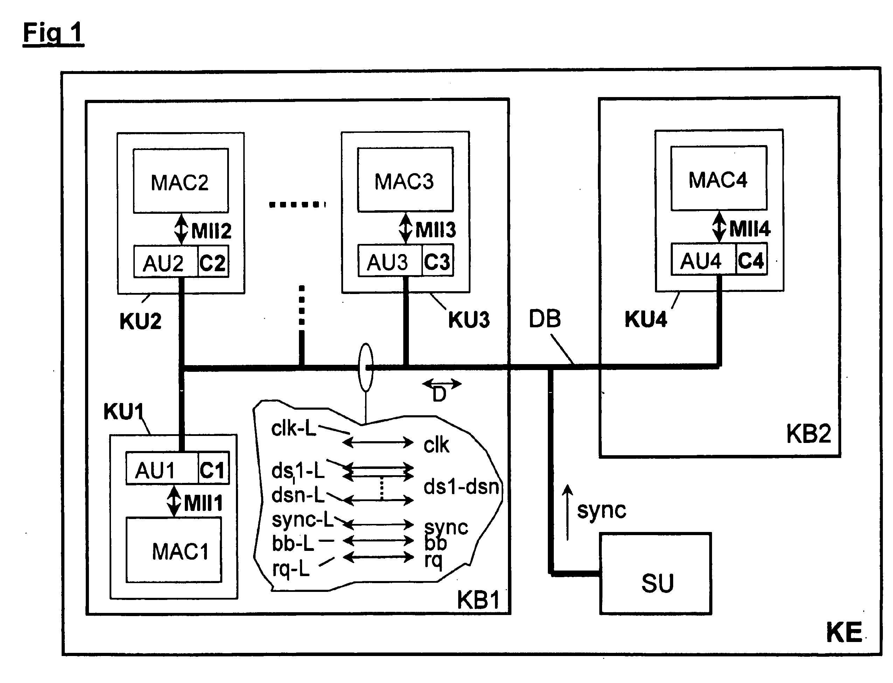

In **Figur 1** ist in einem Prinzipschaltbild beispielhaft eine Kommunikationseinrichtung KE dargestellt, welche eine erste und zweite Kommunikationsbaugruppe KB1, KB2 sowie eine Synchronisationseinheit SU aufweist. Die erste und zweite Kommunikationsbaugruppe KB1, KB2 sowie die Synchronisationseinheit SU sind an einen Datenbus DB angeschlossen, der beispielhaft eine Taktsignalleitung clk-L, eine Synchronisierungsleitung sync-L, eine erste Steuersignalleitung bb-L, eine zweite Steuersignalleitung rq-L und ein bis n-te Datenleitungen ds1-L bis dsn-L aufweist. Des Weiteren sind beispielhaft in der ersten Kommunikationsbaugruppe KB1 eine erste, zweite und dritte Kommunikationseinheit KU1,KU2,KU3 sowie in der zweiten Kommunikationsbaugruppe KB2 eine vierte Kommunikationseinheit KU4 angeordnet, welche an den erfindungsgemäßen Datenbus DB angeschlossen sind. Die Anzahl der Kommunikationsbaugruppen KB1, KB2 und der Kommunikationseinheiten KU1 bis KU4 ist abhängig von der eingesetzten Übertragungstechnologie bzw. dem Übertragungsmedium. Bei einer hohen Anzahl von Kommunikationseinheiten KU pro Kommunikationsbaugruppe KB kann je nach verwendeter Übertragungstechnologie zusätzliche Hardware, beispielsweise Repeater, erforderlich sein, um die Kommunikationsbaugruppe KB bzw. deren Kommunikationseinheiten KU an den erfindungsgemäßen Datenbus DB anschließen zu können.

In der ersten Kommunikationseinheit KU1 ist eine erste Anpassungseinheit AU1 und eine erste MAC-Steuereinheit MAC1 angeordnet, wobei die erste Anpassungseinheit AU1 und die erste MAC-Steuereinheit MAC1 über eine erste MII-Schnittstelle MII1 miteinander verbunden sind. Des Weiteren weist die erste Anpassungseinheit AU1 einen ersten Zähler C1 auf und ist an den Datenbus DB angeschlossen. In der zweiten Kommunikationseinheit KU2 ist eine zweite, einen zweiten Zähler C2 aufweisende Anpassungseinheit AU2 und eine zweite MAC-Steuereinheit MAC2 vorgesehen, die über eine zweite MII-Schnittstelle MII2 verbunden sind. Analog hierzu weist die dritte Kommunikationseinheit KU3 eine dritte, einen dritten Zähler C3 aufweisende Anpassungseinheit AU3 und eine dritte MAC-Steuereinheit MAC3 auf, welche über eine dritte MII-Schnittstelle MII3 miteinander verbunden sind. Die dritte Anpassungseinheit AU3 ist zusätzlich an den Datenbus DB angeschlossen.

Die in der zweiten Kommunikationsbaugruppe KB2 angeordnete vierte Kommunikationseinheit KU4 weist eine an den Datenbus DB angeschlossene vierte Anpassungseinheit AU4 und eine vierte MAC-Steuereinheit MAC4 auf, die über eine vierte MII-Schnittstelle MII4 miteinander verbunden sind. Des Weiteren ist die vierte Anpassungseinheit AU4 an den Datenbus DB angeschlossenen und weist einen vierten Zähler C4 auf.

Über die Taktsignalleitung clk-L des Datenbusses DB wird ein beispielsweise in der Synchronisationseinheit SU erzeugtes Taktsignal clk an die erste bis vierte Kommunikationseinheit KU1 bis KU4 übertragen. Des Weiteren wird zur erfindungsgemäßen Synchronisation der ersten bis vierten Kommunikationseinheit KU1 bis KU4 in der Synchronisationseinheit SU ein Synchronisierungssignal sync erzeugt und über die Synchronisierungsleitung sync-L an die erste bis vierte Kommunikationseinheiten KU1 bis KU4 bzw. an die erste und zweite Kommunikationsbaugruppe KB1, KB2 übertragen. Die Taktsignalleitung clk-L sowie die Synchronisationssignalleitung sync-L sind nicht zwingend erforderlich, zumal beispielsweise das Taktsignal clk per Recovery aus den Datensignalen bzw. den Daten D rückgewonnen werden kann und das Synchronisationssignal sync ebenfalls durch einen in den Daten D enthaltenen Synchronisationsimpuls ermittelt werden kann. Zusätzlich wird über die erste bzw. zweite Steuersignalleitung bb-L, rq-L ein erstes bzw. zweites Steuersignal bb, rq an die erste bis vierte Kommunikationseinheit KU1 bis KU2 bzw. an die erste bis vierte Anpassungseinheit AU1 bis AU4 geführt. Über die ein bis n-te Datenleitungen ds1-L bis dsn-L des Datenbusses DB werden Daten D von beispielsweise der ersten MAC-Steuereinheit MAC1 der ersten Kommunikationseinheit KU1 über die erste MII-Schnittstelle MII1 und die erste Anpassungseinheit AU1 an die zweite Kommunikationsbaugruppe KB2 bzw. die vierte Kommunikationseinheit KU4 übertragen.

Der erfindungsgemäße Datenbus DB stellt ein logisches Multi-Masterbussystem dar, der eine Datenkommunikation zwischen beispielsweise einer ersten MAC-Steuereinheit MAC1 mit mindestens einer weiteren, beispielsweise der dritten MAC-Steuereinheit MAC3, kollisionsfrei ermöglicht. Der Datenbus DB ist unabhängig vom physikalischen Übertragungsmedium sowie von der Übertragungstechnologie und weist eine Übertragungsrate von beispielsweise 100 Mbit/s auf, wobei unterschiedliche Übertragungsraten durch den erfindungsgemäßen Datenbus DB unterstützt werden. Des Weiteren ist der erfindungsgemäße Datenbus DB als bidirektionaler Datenbus mit gemeinsamen Sende- und Empfangssignalen - in Figur 1 nicht dargestellt - ausgestaltet. Aus physikalischen Gründen werden die Sende- und Empfangsleitungen des erfindungsgemäßen Datenbusses getrennt geführt und unidirektional betrieben. Aufgrund des standardgemäß festgelegten Half-Duplex-Betriebes der MII-Schnittstellen MII1 bis MII4 ist kein gleichzeitiges Senden und Empfangen von Daten D über den Datenbus DB möglich, d.h. werden beispielsweise von der ersten MAC-Steuereinheit MAC1 Daten D an den Datenbus DB gesteuert, so sind die weiteren an den Datenbus DB angeschlossenen MAC-Steuereinheiten MAC2 bis MAC4 auf Empfang geschaltet.

Zur erfindungsgemäßen Steuerung der Datenkommunikation zwischen mehreren MAC-Steuereinheiten MAC1 bis MAC4 sind die über eine standardisierte MII-Schnittstelle MII1 bis MII4 angeschlossenen, ersten bis vierten Anpassungseinheiten AU1 bis AU4 vorgesehen, welche über das von der Signalisierungseinheit SU erzeugte und über den Datenbus DB bzw. die Signalisierungsleitung sync-L übertragene Signalisierungssignal sync zueinander synchronisiert werden.

Mit Hilfe des Synchronisierungssignals sync werden die in der ersten bis vierten Anpassungseinheit AU1 bis AU4 angeordneten ersten bis vierten Zähler C1 bis C4 zurückgesetzt, so daß diese synchron zueinander zählen und ein Auseinanderlaufen der ersten bis vierten Zähler C1 bis C4 vermieden wird. Den ersten bis vierten Zähler C1 bis C4 wird beispielsweise die Länge von N+1 Zählschritten zugewiesen, wobei N die Anzahl der an den Datenbus DB angeschlossenen Anpassungseinheiten AU1 bis AU4 entspricht, d.h. im dargestellten Ausführungsbeispiel beträgt die Anzahl der Zählschritte der ersten bis vierten Zähler C1 bis C4 jeweils 5. Der zusätzliche, fünfte Zählschritt ist für die Synchronisation des ersten bis vierten Zählers C1 bis C4 vorgesehen.

Des Weiteren wird erfindungsgemäß mit Hilfe eines Zählschrittes ein Berechtigungszeitschlitz bs1 bis bs5 definiert, der einen Berechtigungs-Zeitbereich für die Auswertung der über den Datenbus DB übertragenen ersten und zweiten Steuersignale bb,rq durch die erste bis vierte Anpassungseinheit AU1 bis AU4 oder für die Synchronisation der ersten bis vierten Zähler C1 bis C4 angibt. Hierzu wird erfindungsgemäß der ersten bis vierten Anpassungseinheit AU1 bis AU4 ein erster bis vierter Berechtigungszeitschlitz bs1 bis bs4 zugeteilt, wodurch eine fest vorgegebene Zugriffsreihenfolge auf den erfindungsgemäßen Datenbus DB definiert wird, d.h. im zugehörigen Berechtigungszeitschlitz bs1 bis bs4 werden durch die jeweilige Anpassungseinheit AU1 bis AU4 das erste und/oder zweite Steuersignal bb, rq ausgewertet. Durch die Anpassungseinheiten AU1 bis AU4 wird sozusagen "selbständig" im jeweiligen Berechtigungszeitschlitz bs1 bis bs4 ein Buszugriff durchgeführt.

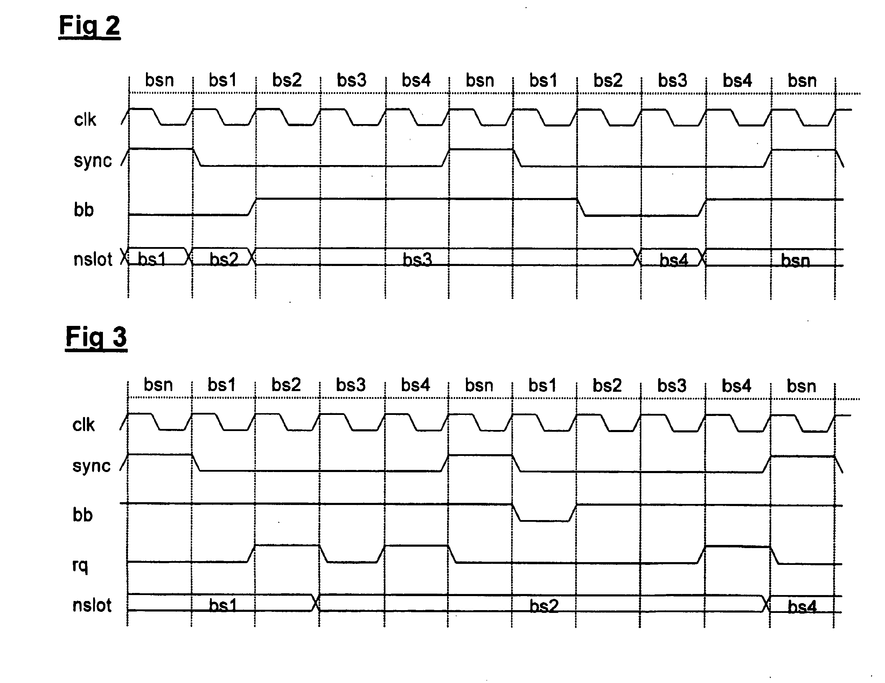

In **Figur 2** ist beispielhaft in einem Signalablaufdiagramm die Steuerung des erfindungsgemäßen Datenbusses DB dargestellt, daß den zeitlichen Verlauf des Taktsignals clk, des Signalisierungsignals sync, des ersten Steuersignals bb und eines in der ersten bis vierten Anpassungseinheit AU1 bis AU4 intern ermitteltes Regelungssignales nslot in den ersten bis vierten und schließlich im n-ten Berechtigungszeitschlitz bs1 bis bsn zeigt. Der n-te Berechtigungszeitschlitz bsn ist im dargestellten Ausführungsbeispiel dem für die Synchronisation der ersten bis vierten Anpassungseinheiten AU1 bis AU4 vorgesehenen fünften Berechtigungszeitschlitz bs5 gleichzusetzen. Wie aus **Figur 2** hervorgeht weist das Signalisierungssignal sync jeweils im n-ten Berechtigungszeitschlitz bsn den logischen "High"-Zustand auf, wodurch die ersten bis vierten Zähler C1 bis C4 in der ersten bis vierten Anpassungseinheit AU1 bis AU4 nahezu gleichzeitig zurückgesetzt und somit synchronisiert werden. In den ersten bis vierten Berechtigungszeitschlitzen bs1 bis bs4 weist das Signalisierungssignal sync jeweils den logischen "Low"-Zustand auf.

Durch das erste Steuersignal bb wird erfindungsgemäß der Belegungszustand des Datenbusses DB angezeigt, d.h. weist das erste Steuersignal bb den logischen _{"}High"-Zustand auf, so ist der Datenbus DB belegt, und weist das erste Steuersignal bb den logischen "Low"-Zustand auf, so ist der Datenbus DB frei. Ein belegter Datenbus DB ist einer einzelnen, beispielsweise der zweiten MAC-Steuereinheit MAC2 zugeteilt und diese hat somit die Berechtigung ihre Daten D über die zweite MII-Schnittstellen MII2 und die zweite Anpassungseinheit AU2 an den Datenbus DB durchzuschalten. Anhand des in der ersten bis vierten Anpassungseinheit AU1 bis AU4 jeweils intern ermittelten und in der jeweiligen ersten bis vierten Anpassungseinheit vorliegenden Regelungssignals nslot wird der an die MAC-Steuereinheit MAC1 bis MAC4 angeschlossenen Anpassungseinheit AU1 bis Au4 angezeigt, welche Anpassungseinheit AU1 bis AU4 beim Freiwerden des Datenbusses DB als nächste auf den Datenbus DB zugreifen darf. In dem in **Figur 2** dargestellten Ausführungsbeispiel zeigt das Regelungssignal nslot bei freiem Datenbus DB den nächsten Berechtigungszeitschlitz bs1 bis bs4 an. Bei aktuellen ersten Berechtigungszeitschlitz bs1 und somit einem aktuell den zweiten Berechtigungszeitschlitz bs2 anzeigenden Regelungssignal nslot wird im nächsten Berechtigungszeitschlitz bs2 der Datenbus DB durch die zweite Anpassungseinheit AU2 belegt. Bei einem belegten Datenbus DB wird das Regelungssignal nslot konstant gehalten, um die durch die Zuteilung der Berechtigungszeitschlitze bs1 bis bs4 getroffenen Zugriffsreihenfolge Aufrecht zu erhalten. Wird beispielsweise durch die zweite Anpassungseinheit AU2 der Datenbus DB2 im Berechtigungszeitschlitz bs2 der Datenbus DB belegt, so ist das Regelungssignal nslot konstant mit dem den dritten Berechtigungszeitschlitz bs3 anzeigenden Wert belegt. Die Auswertung des Steuersignals bb kann beispielsweise während des zugehörigen Berechtigungszeitschlitzes bs1 bis bs4 oder ständig durchgeführt werden. In dem in **Figur 2** dargestellten Ausführungsbeispiel wird beispielsweise durch die zweite Anpassungseinheit AU2 im zugehörigen zweiten Berechtigungszeitschlitz bs2 der Belegungszustand des Datenbusses DB anhand des zuvor anliegenden ersten Steuersignales bb ermittelt und bei einem freien Datenbus DB signalisierenden ersten Steuersignal bb, d.h. das erste Steuersignal bb weist den logischen "Low"-Zustand auf, wird der angeschlossenen zweiten MAC-Steuereinheit MAC2 über die zweite MII-Schnittstelle MII2 eine Sendeberechtigung erteilt und dem ersten Steuersignal bb der logische "High"-Zustand zugewiesen. Solange durch beispielsweise die zweite MAC-Steuereinheit MAC2 Daten D an die weiteren MAC-Steuereinheiten MAC1, MAC3, MAC4 übertragen werden, weist das erste Steuersignal bb den logischen "High"-Zustand auf. Nach Beendigung der Übertragung von Daten D an die weiteren MAC-Steuereinheiten MAC1, MAC3, MAC4 wird durch die an die zweite MAC-Steuereinheit MAC2 angeschlossene zweite Anpassungseinheit AU2 das erste Steuersignal bb in den logischen "Low"-Zustand gesteuert und somit der Datenbus DB wieder freigegeben. Bei dem in **Figur 2** dargestellten Ausführungsbeispiel werden von der zweiten MAC-Steuereinheit MAC2 von Beginn an des zweiten Berechtigungszeitschlitzes bs2 sowie über den Zeitraum des dritten, vierten, n-ten sowie wiederum ersten Berechtigungszeitschlitz bs3, bs4, bsn, bs1 hinaus Daten D von der zweiten MAC-Steuereinheit MAC2 an den Datenbus DB übertragen. Nach der Datenübertragung, beispielsweise nach der Übertragung von einen oder mehreren Datenpaketen, durch die zweite MAC-Steuereinheit MAC2 wird mit Hilfe der zweiten Anpassungseinheit AU2 das erste Steuersignal bb nach dem ersten Berechtigungszeitschlitz bs1 in den logischen "Low"-Zustand gesteuert und somit der Datenbus DB freigegeben.

Wie bereits zuvor beschrieben, wird anhand des in der ersten bis vierten Anpassungseinheit AU1 bis AU4 jeweils intern ermittelten und in der jeweiligen ersten bis vierten Anpassungseinheit AU1 bis AU4 aktuell vorliegenden Regelungssignales nslot der an die MAC-Steuereinheit MAC1 bis MAC4 angeschlossenen Anpassungseinheit AU1 bis AU4 angezeigt, welche Anpassungseinheit AU1 bis AU4 beim Freiwerden des Datenbusses DB als nächste auf den Datenbus DB zugreifen darf. Im in Figur 2 dargestellten Ausführungsbeispiel ist nach der zweiten Anpassungseinheit AU2 die dritte Anpassungseinheit im dritten Berechtigungszeitschlitz bs3 berechtigt auf den Datenbus zuzugreifen, zumal das erste Steuersignal bb den einen freien Datenbus DB signalisierenden Zustand, d.h. den logischen "Low"-Zustand, aufweist. Da die dritte MAC-Steuereinheit MAC3 nicht sendebereit ist, wird im dritten Berechtigungszeitschlitz bs3 das erste Steuersignal bb von der dritten Anpassungseinheit AU3 nicht in den "High"-Zustand gesteuert, sondern unverändert gelassen. Im Anschluß daran wird mit Hilfe des in den Anpassungseinheiten Au1 bis AU4 aktuell vorliegenden Regelungssignales nslot der an die vierte MAC-Steuereinheit MAC4 angeschlossenen Anpassungseinheit AU4 angezeigt, daß gemäß der erfindungsgemäßen festen Zugriffsreihenfolge im vierten Berechtigungszeitschlitz bs4 durch die vierte Anpassungseinheit AU4 der Belegungszustand des Datenbusses DB4 ermittelt wird und abhängig vom Belegungszustand des Datenbusses DB der vierten MAC-Steuereinheit MAC4 die Sendeberechtigung bzw. die Buszugriffsberechtigung zugeteilt wird. Demgemäß wird in Figur 2 im vierten Berechtigungszeitschlitz bs4 dem ersten Steuersignal bb der logische "High"-Zustand, d.h. der Datenbus DB ist belegt, durch die vierte Anpassungseinheit AU4 zugewiesen.

**Figur 3** zeigt beispielsweise in einem weiteren Signalablaufdiagramm eine erfindungsgemäße Variante für die Steuerung der Datenkommunikation über den erfindungsgemäßen Datenbus DB, wobei in **Figur 3** insbesondere der zeitliche Verlauf des Taktsignals clk, des Signalisierungsignals sync, des ersten Steuersignals bb, des zweiten Steuersignals rq und des in der ersten bis vierten Anpassungseinheit AU1 bis AU4 intern ermittelten Regelungssignales nslot über den ersten bis vierten und schließlich den n-ten Berechtigungszeitschlitz bs1 bis bsn dargestellt ist. Die Steuerung der Datenkommunikation über den erfindungsgemäßen Datenbus DB erfolgt analog zu **Figur 2,** wobei mit Hilfe des in **Figur 3** dargestellten zweiten Steuersignals rq im Unterschied zur **Figur 2** eine Vorreservierung des aktuell belegten Datenbusses DB durch mindestens eine Anpassungseinheit AU1 bis AU4 signalisiert wird. Hierzu kann durch an eine sendebereite MAC-Steuereinheit MAC1 bis MAC4 angeschlossene Anpassungseinheit AU1 bis AU4 das zweite Steuersignal rq im zugehörigen Berechtigungszeitschlitz bs1 bis bs4 in den "High"-Zustand gesteuert werden und somit eine Vorreservierung des aktuell belegten Datenbusses DB durchgeführt werden. Die Vorreservierung des Datenbusses DB durch das zweite Steuersignal rq wird bei der Ermittlung des Regelungssignales nslot in jeder Anpassungseinheit AU1 bis AU4 berücksichtigt, indem als nächste zugriffsberechtigte MAC-Steuereinheit MAC1 bis MAC4 bzw. deren vorgeschaltete Anpassungseinheit AU1 bis AU4 die vorreservierte und sendebereite MAC-Steuereinheit MAC1 bis MAC4 bzw. deren vorgeschaltete Anpassungseinheit AU1 bis AU4 angezeigt wird, d.h. die durch die Berechtigungszeitschlitze bs1 bis bs4 fest vorgegebene Zugriffsreihenfolge wird zu Gunsten der Vorreservierung abgeändert.

In **Figur 3** wird während der Belegung des Datenbusses DB durch die erste MAC-Steuereinheit MAC1 die Sendebereitschaft der zweiten MAC-Steuereinheit MAC2 durch das zweite Steuersignal rq im zugehörigen zweiten Berechtigungszeitschlitz bs2 angezeigt, woraufhin durch das jeweilige Regelungssignal nslot bereits im dritten Berechtigungszeitschlitz bs3 die Vorreservierung des Datenbusses durch die zweite MAC-Steuereinheit MAC2 angezeigt wird. Diese Vorreservierung wird solange aufrecht erhalten - in **Figur 3** über den Zeitraum des dritten, vierten, n-ten, und ersten Berechtigungszeitschlitz bs3, bs4, bsn, bs1 - bis der zweiten MAC-Steuereinheit MAC2 durch die zweite Anpassungseinheit AU2 der Datenbus DB bzw. die Sendeberechtigung zugeteilt wird. Liegt bereits eine Vorreservierung wie in **Figur 3** dargestellt durch die zweite Anpassungseinheit AU2 vor, so kann eine weitere Vorreservierung wie ebenfalls in **Figur 3** dargestellt im vierten Berechtigungszeitschlitz bs4 beispielsweise durch die vierte Anpassungseinheit AU4 erst dann mit Hilfe des jeweiligen Regelungssignales nslot berücksichtig werden, wenn der Datenbus der zweiten Anpassungseinheit AU2 (ursprünglich reserviert) zugeteilt ist. Das bedeutet, mit Hilfe des Regelungssignales nslot kann insbesondere nur eine MAC-Steuereinheit MAC1 bis MAC4 den Datenbus DB vorreservieren.

Die Steuerung des Buszugriffes in der jeweiligen Anpassungseinheit AU1 bis AU4 wird beispielsweise mit Hilfe einer auf einem Mikrokontroller oder in einem FPGA implementierten "Finite-State-Machine" realisiert. Die "Finite-State-Machine" weist hierfür im wesentlichen drei Zustände bzw. "States" auf: "Idle", "Request" und "Owner".

Im "Idle"-Zustand ist die erste bis vierte Anpassungseinheit AU1 bis AU4 inaktiv, d.h. die jeweils über die MII-Schnittstelle MII1 bis MII2 angeschlossene MAC-Steuereinheit MAC1 bis MAC4 ist nicht sendebereit. Im "Request"-Zustand ist die jeweilige MAC-Steuereinheit MAC1 bis MAC4 sendebereit. Jedoch werden durch die Anpassungseinheit AU1 bis AU4 das Aussenden von Daten D durch die MAC-Steuereinheit MAC1 bis MAC4 solange verzögert und keine Daten D an den Datenbus D weitergeschaltet bis die "Finite-State-Machine" den Zustand "Owner" annimmt. Im "Owner"-Zustand hat die Anpassungseinheit AU1 bis AU4 und somit die angeschlossene MAC-Steuereinheit MAC1 bis MAC4 die Berechtigung zum Buszugriff und die Daten D der MAC-Steuereinheit MAC1 bis MAC4 werden über die erste bis n-te Datensignalleitung ds1 bis dsn an die weiteren MAC-Steuereinheiten MAC1 bis MAC4 übertragen.

Ist eine kollisionsfreie Datenkommunikation nicht erforderlich kann als weitere Variante der Erfindung die erfindungsgemäße Zugriffsteuerung auf den Datenbus DB durch die Anpassungseinheiten AU1 bis AU4 teilweise vernachlässigt werden, d.h. die Zuordnung von Berechtigungszeitschlitzen bs1 bis bs4 zu den einzelnen MAC-Steuereinheiten MAC1 bis MAC4 kann dahingehend vereinfacht werden, daß auftretende Kollisionen durch die Anpassungseinheiten AU1 bis AU4 ermittelt und an die MAC-Steuereinheiten signalisiert werden.

Der erfindungsgemäße Datenbus DB ist für eine überschaubare Anzahl von Busteilnehmern optimiert und bietet eine Möglichkeit mehrere MAC-Steuereinheiten MAC1 bis MAC2 ohne zusätzliche Hardware physikalisch direkt miteinander zu verbinden, um diese beispielsweise via Ethernet bzw. IEEE 802.3 LAN logisch miteinander kommunizieren zu lassen.

## Patentansprüche

1. Verfahren zur Datenkommunikation zwischen mehreren, gleichberechtigten MAC-(Media-Access Control)-Steuereinheiten (MAC1 bis MAC4), die über eine MII-(Media Independent Interface)-Schnittstelle (MII1 bis MII4) an jeweils eine Anpassungseinheit (AU1 bis AU4) angeschlossen sind und die Anpassungseinheiten (AU1 bis AU4) über einen mehrere Datenleitungen (ds1-L bis dsn-L) und mindestens eine Steuerleitung (bb-L,rq-L) umfassenden Datenbus (DB) verbunden sind,
- bei dem die Anpassungseinheiten (AU1 bis AU4) über ein Synchronisierungssignal (sync) synchronisiert werden und jeder Anpassungseinheit (AU1 bis AU4) ein Berechtigungszeitschlitz (bs1 bis bs4) zugeteilt wird,
- bei dem den Anpassungseinheiten über ein Steuersignal (bb) der Belegungszustand des Datenbusses (DB) signalisiert wird,
- bei dem durch die Anpassungseinheit (AU1 bis AU4) im zugehörigen Berechtigungszeitschlitz (bs1 bis bs4) anhand des Steuersignals (bb) der Belegungszustand des Datenbusses (DB) ermittelt wird,
- bei dem bei einem einen freien Datenbus (DB) signalisierenden Steuersignal (bb) der angeschlossenen, gleichberechtigten MAC-Steuereinheit (MAC1 bis MAC4) im zugehörigen Berechtigungszeitschlitz (bs1 bis bs4) eine Sendeberechtigung zugeteilt wird und
- bei dem bei einem einen belegten Datenbus (DB) signalisierenden Steuersignal (bb) der angeschlossenen, gleichberechtigten MAC-Steuereinheit (MAC1 bis MAC4) im zugehörigen Berechtigungszeitschlitz (bs1 bis bs4) keine Sendeberechtigung zugeteilt wird.

2. Verfahren nach Anspruch 1,
**dadurch gekennzeichnet,**
**daß** der Berechtigungszeitschlitz (bs1 bis bs4) mit Hilfe eines in den Anpassungseinheiten (AU1 bis AU4) angeordneten Zählers (C1 bis C4) ermittelt wird und die Zähler (C1 bis C4) jeweils mit Hilfe des Synchronisierungssignals (sync) zurückgesetzt werden.

3. Verfahren nach Anspruch 2,
**dadurch gekennzeichnet,**
**daß** für N Anpassungseinheiten (AU1 bis AU4) den Zählern (C1 bis C4) jeweils die Länge N+1 zugewiesen wird und ein Berechtigungszeitschlitz (bs1 bis bsn) durch einen Zählerstand festgelegt ist.

4. Verfahren nach einem der Ansprüche 1 bis 3,
**dadurch gekennzeichnet,**
**daß** in der Anpassungseinheit (AU1 bis AU4) im zugehörigen Berechtigungszeitschlitz (bs1 bis bs4) vor der Zuteilung der Sendeberechtigung an die MAC-Steuereinheit (MAC1 bis MAC4) durch die Anpassungseinheit (AU1 bis AU4) das Steuersignal (bb) in den einen belegten Datenbus (db) signalisierenden Zustand geschaltet wird sowie die Daten (D) der sendeberechtigten MAC-Steuereinheit (MAC1 bis MAC4) an den Datenbuss (DB) durchgeschaltet werden.

5. Verfahren nach Anspruch 4,
**dadurch gekennzeichnet,**
**daß** nach dem Durchschalten der Daten (D) an den Datenbus (DB) das Steuersignal (bb) in den einen freien Datenbus (DB) signalisierenden Zustand geschaltet wird.

6. Verfahren nach einem der Ansprüche 1 bis 5,
**dadurch gekennzeichnet,**
**daß** der Datenbus (DB) als Multi-Masterbus realisiert ist.

7. Verfahren nach einem der Ansprüche 1 bis 6,
**dadurch gekennzeichnet,**
**daß** durch die Zuteilung eines Berechtigungszeitschlitzes (bs1 bis bs4) für genau eine Anpassungseinheit (AU1 bis AU4) eine fest vorgegebene Zugriffsreihenfolge auf den Datenbus (DB) definiert wird.

8. Verfahren nach einem der Ansprüche 1 bis 7,
**dadurch gekennzeichnet,**
**daß** den Anpassungseinheiten (AU1 bis AU4) über ein weiteres Steuersignal (rq) eine Vorreservierung des aktuell belegten Datenbusses (DB) durch mindestens eine Anpassungseinheit (AU1 bis AU4) signalisiert wird.

9. Verfahren nach einem der Ansprüche 1 bis 8,
**dadurch gekennzeichnet,**
**daß** die MII-Schnittstelle (MII1 bis MII4) im Half-Duplex-Mode betrieben wird.

10. Verfahren nach einem der Ansprüche 1 bis 9,
**dadurch gekennzeichnet,**
**daß** der Datenbus (DB) als bidirektionaler Bus realisiert wird.

11. Anordnung zur Durchführung des Verfahrens nach Anspruch 1 zur Datenkommunikation zwischen mehreren MAC-(Media-Access Control)-Steuereinheiten (MAC1 bis MAC4),
bei der jeweils eine MAC-Steuereinheiten (MAC1 bis MAC4) über MII-(Media Independent Interface)-Schnittstellenleitungen (MII1 bis MII4) an eine Anpassungseinheit (AU1 bis AU4) angeschlossen ist,
bei der die Anpassungseinheiten (AU1 bis AU4) ausgebildet sind zur Durchführung eines Verfahrens nach Anspruch 1 und über einen mehrere Datenleitungen (ds1-L bis dsn-L) und mindestens eine Steuerleitung (bb-L, rq-L) umfassenden Datenbus (DB) miteinander verbunden sind,
bei der die Anpassungseinheiten (AU1 bis AU4) zur Anpassung von über die MII-Schnittstellenleitungen (MII1 bis MII4) übertragenen MII-Schnittstellensignalen an die über den Datenbus übertragenen Datenbussignale (ds1 bis dsn, bb, rq) vorgesehen sind.

## Claims

1. Method for data communication between a number of peer MAC (Media Access Control) control units (MAC1 to MAC4), which are connected respectively via an MII (Media Independent Interface) interface (MII1 to MII4) to an interworking unit (AU1 to AU4) and the interworking units (AU1 to AU4) are connected via a data bus (DB) comprising a number of data lines (ds1-L to dsn-L) and at least one control line (bb-L, rq-L),
- in which the interworking units (AU1 to AU4) are synchronised by means of a synchronisation signal (sync) and an authorisation time slot (bs1 to bs4) is allocated to each interworking unit (AU1 to AU4),
- in which the busy state of the data bus (DB) is signalled to the interworking units by means of a control signal (bb),
- in which the busy state of the data bus (DB) is identified by the interworking unit (AU1 to AU4) in the associated authorisation time slot (bs1 to bs4) based on the control signal (bb),
- in which if the control signal (bb) signals an idle data bus (DB), transmit authorisation is allocated to the connected peer MAC control unit (MAC1 to MAC4) in the associated authorisation time slot (bs1 to bs4) and
- in which if the control signal (bb) signals a busy data bus (DB), transmit authorisation is not allocated to the connected peer MAC control unit (MAC1 to MAC4) in the associated authorisation time slot (bs1 to bs4).

2. Method according to claim 1,
**characterized in that**
the authorisation time slot (bs1 to bs4) is identified with the aid of a counter (C1 to C4) disposed in the interworking units (AU1 to AU4) and the counters (C1 to C4) are reset respectively with the aid of the synchronisation signal (sync) .

3. Method according to claim 2,
**characterized in that**
the length N+1 is allocated to the counters (C1 to C4) respectively for N interworking units (AU1 to AU4) and an authorisation time slot (bs1 to bsn) is defined by a counter state.

4. Method according to one of claims 1 to 3,
**characterized in that**
in the interworking unit (AU1 to AU4) in the associated authorisation time slot (bs1 to bs4) before the allocation of transmit authorisation to the MAC control unit (MAC1 to MAC4) by the interworking unit (AU1 to AU4) the control signal (bb) is switched to the state signalling a busy data bus (DB) and data (D) from the ready to transmit MAC control unit (MAC1 to MAC4) is switched through to the data bus (DB).

5. Method according to claim 4,
**characterized in that**
after the data (D) has been switched through to the data bus (DB) the control signal (bb) is switched to the state signalling an idle data bus (DB).

6. Method according to one of claims 1 to 5,
**characterized in that**
the data bus (DB) is configured as a multi-master bus.

7. Method according to one of claims 1 to 6,
**characterized in that**
a permanently predefined sequence for access to the data bus (DB) is defined by allocating an authorisation time slot (bs1 to bs4) for just one interworking unit (AU1 to AU4).

8. Method according to one of claims 1 to 7,
**characterized in that**
pre-reservation of the currently busy data bus (DB) is signalled to the interworking units (AU1 to AU4) by at least one interworking unit (AU1 to AU4) by means of a further control signal (rq).

9. Method according to one of claims 1 to 8,
**characterized in that**
the MII interface (MII1 to MII4) is operated in half duplex mode.

10. Method according to one of claims 1 to 9,
**characterized in that**
the data bus is configured as a bi-directional bus.

11. Arrangement for implementing the method according to claim 1 for data communication between a number of MAC (Media Access Control) control units (MAC1 to MAC4),
in which a MAC (Media Access Control) control unit (MAC1 to MAC4) is connected respectively via MII (Media Independent Interface) interface lines (MII1 to MII4) to an interworking unit (AU1 to AU4),
in which the interworking units (AU1 to AU4) are configured to implement a method according to claim 1 and are connected together via a data bus (DB) comprising a number of data lines ds1-L to dsn-L) and at least one control line (bb-L, rq-L),
in which the interworking units (AU1 to AU4) are provided to adapt MII interface signals transmitted via the MII interface lines (MII1 to MII4) to the data bus signals (ds1 to dsn, bb, rq) transmitted via the data bus.

## Revendications

1. Procédé pour la communication de données entre plusieurs unités de commande MAC (Media-Access Control) (MAC1 à MAC4) équivalentes, qui sont raccordées par une interface MII (Media Independent Interface) (MII1 à MII4) à respectivement une unité d'adaptation (AU1 à AU4) et les unités d'adaptation (AU1 à AU4) étant reliées au moyen d'un bus de données (DB) comprenant plusieurs lignes de données (ds1-L à dsn-L) et au moins une ligne de commande (bb-L, rq-L),
- dans lequel les unités d'adaptation (AU1 à AU4) sont synchronisées au moyen d'un signal de synchronisation (sync) et un créneau temporel d'autorisation (bs1 à bs4) est attribué à chaque unité d'adaptation (AU1 à AU4),
- dans lequel l'état d'occupation du bus de données (DB) est signalé aux unités d'adaptation par un signal de commande (bb),
- dans lequel l'état d'occupation du bus de données (DB) est déterminé par l'unité d'adaptation (AU1 à AU4) dans le créneau temporel d'autorisation (bs1 à bs4) spécifique à l'aide du signal de commande (bb),
- dans lequel, dans le cas d'un signal de commande (bb) signalant un bus de données (DB) libre, une autorisation d'émission est accordée à l'unité de commande MAC (MAC1 à MAC4) raccordée et équivalente dans le créneau temporel d'autorisation spécifique (bs1 à bs4) et
- dans lequel, dans le cas d'un signal de commande (bb) signalant un bus de données (DB) occupé, aucune autorisation d'émission n'est attribuée à l'unité de commande MAC (MAC1 à MAC4) raccordée et équivalente dans le créneau temporel d'autorisation spécifique (bs1 à bs4).

2. Procédé selon la revendication 1,
**caractérisé en ce que**
le créneau temporel d'autorisation (bs1 à bs4) est déterminé à l'aide d'un compteur (C1 à C4) disposé dans les unités d'adaptation (AU1 à AU4) et les compteurs (C1 à C4) sont remis à zéro respectivement à l'aide du signal de synchronisation (sync) .

3. Procédé selon la revendication 2,
**caractérisé en ce que**
pour N unités d'adaptation (AU1 à AU4), respectivement la longueur N+1 est attribuée aux compteurs (C1 à C4) et un créneau temporel d'autorisation (bs1 à bsn) est défini par une indication de compteur.

4. Procédé selon l'une quelconque des revendications 1 à 3,
**caractérisé en ce que**
le signal de commande (bb) est commuté dans l'état signalant un bus de données (DB) occupé dans l'unité d'adaptation (AU1 à AU4) dans le créneau temporel d'autorisation (bs1 à bs4) spécifique avant l'attribution de l'autorisation d'émission à l'unité de commande MAC (MAC1 à MAC4) par l'unité d'adaptation (AU1 à AU4)et les données (D) de l'unité de commande MAC (MAC1 à MAC4) autorisée pour l'émission sont envoyées au bus de données (DB).

5. Procédé selon la revendication 4,
**caractérisé en ce que**,
après la transmission des données (D) au bus de données (DB), le signal de commande (bb) est commuté dans l'état signalant un bus de données (DB) libre.

6. Procédé selon l'une quelconque des revendications 1 à 5,
**caractérisé en ce que**
le bus de données (DB) est réalisé comme un bus multimaster.

7. Procédé selon l'une quelconque des revendications 1 à 6,
**caractérisé en ce que**,
par l'attribution d'un créneau temporel d'autorisation (bs1 à bs4) pour exactement une unité d'adaptation (AU1 à AU4), on définit un ordre de succession d'accès prédéfini de façon fixe au bus de données (DB).

8. Procédé selon l'une quelconque des revendications 1 à 7,
**caractérisé en ce que**
une pré-réservation du bus de données (DB) occupé actuellement est signalée aux unités d'adaptation (AU1 à AU4) au moyen d'un autre signal de commande (rq) par au moins une unité d'adaptation (AU1 à AU4).

9. Procédé selon l'une quelconque des revendications 1 à 8,
**caractérisé en ce que**
l'interface MII (MII1 à MII4) fonctionne dans le mode semi-duplex.

10. Procédé selon l'une quelconque des revendications 1 à 9,
**caractérisé en ce que**
le bus de données (DB) est réalisé comme un bus bidirectionnel.

11. Dispositif pour la mise en oeuvre du procédé selon la revendication 1 pour la communication de données entre plusieurs unités de commande MAC (Media-Access-Control) (MAC1 à MAC4),
dans lequel respectivement une unité de commande MAC (MAC1 à MAC4) est raccordée à une unité d'adaptation (AU1 à AU4) au moyen de lignes d'interface MII (Media Independent Interface) (MII1 à MII4),
dans lequel les unités d'adaptation (AU1 à AU4) sont conçues pour la mise en oeuvre d'un procédé selon la revendication 1 et sont reliées entre elles au moyen d'un bus de données (DB) comprenant plusieurs lignes de données (ds1-L à dsn-L) et au moins une ligne de commande (bb-L, rq-L),
dans lequel les unités d'adaptation (AU1 à AU4) sont prévues pour l'adaptation de signaux d'interface MII transmis par les lignes d'interface MII (MII1 à MII4) aux signaux de bus de données (ds1 à dsn, bb, rq) transmis par le bus de données.
